Europäisches Patentamt

**European Patent Office**

**Office européen des brevets**

(11) Veröffentlichungsnummer: **0 310 023**
**A2**

# EUROPÄISCHE PATENTANMELDUNG

(21) Anmeldenummer: **88115985.9**

(22) Anmeldetag: **28.09.88**

(51) Int. Cl.⁴: **H01M 6/50**

(30) Priorität: **02.10.87 DE 3733335**

(43) Veröffentlichungstag der Anmeldung:
**05.04.89 Patentblatt 89/14**

(84) Benannte Vertragsstaaten:
**AT BE CH DE ES FR GB GR IT LI LU NL SE**

(71) Anmelder: **GRILLO-WERKE AG**
**Weseler Strasse 1**
**D-4100 Duisburg 11(DE)**

(72) Erfinder: **Glaeser, Wolfgang, Dr.**
**Siebenlinden 7**
**D-3380 Goslar 1(DE)**

(74) Vertreter: **Werner, Hans-Karsten, Dr. et al**
**Deichmannhaus am Hauptbahnhof**
**D-5000 Köln 1(DE)**

(54) **Batterien auf Basis von sich alkalisch auflösendem Zink mit verringerter Korrosion und Gasentwicklung.**

(57) Batterien auf Basis von sich alkalisch auflösendem Zink mit verringerter Korrosion und Gasentwicklung sind dadurch gekennzeichnet, daß der Pluspol und der Minuspol über einen hochohmigen Widerstand ständig leitend miteinander verbunden sind, welcher einen ständigen Stromfluß ermöglicht, der gleich oder maximal um den Faktor 10 größer ist als der Stromfluß der dem Zinkverbrauch durch Korrosion entspricht.

EP 0 310 023 A2

**Batterien auf Basis von alkalisch auflösendem Zink mit verringerter Korrosion und Gasentwicklung**

Gegenstand der vorliegenden Erfindung sind Batterien auf Basis von sich alkalisch auflösendem zink mit verringerter Korrosion und Gasentwicklung sowie ein Verfahren zur Verringerung der Gasentwicklung und Korrosion von Batterien auf Basis von sich alkalisch auflösendem Zink.

Die meisten der heute üblichen Batterien beruhen darauf, daß zink als Anode oder Kathode sich chemisch auflöst und dabei eine elektrische Spannung liefert. Insbesondere alkalische Batterien neigen im erheblichen Maße zu Korrosion und Gasentwicklung. Diese Korrosion und Gasentwicklung wird im allgemeinen durch einen mehr oder weniger hohen Gehalt an Quecksilber unterdrückt, jedoch meist nicht völlig beseitigt. So entwickeln alkalische Batterien mit Zinkpulver Wasserstoff im Elektrolyten, auch ohne daß es zu einer Stromabgabe kommt. Zur Verminderung der Gasentwicklung wird das eingesetzte Zinkpulver im allgemeinen mit Hilfe von Quecksilber passiviert. Die Verwendung von Quecksilber bedingt erhebliche Aufwendungen für den Arbeitsschutz und den Umweltschutz. Während der Herstellung und Handhabung des zink/Quecksilber-Pulvers bis zum Einsatz in die Batterien sind ständige Umweltschutz- und Arbeitsschutzmaßnahmen notwendig. Es wird weiterhin angestrebt, quecksilberfreie Batterien herzustellen oder aber deren Quecksilbergehalt erheblich zu senken, so daß die an sich wegen der Bauform der Batterien geringe Wahrscheinlichkeit, daß Quecksilber aus der verbrauchten geschlossenen Batterie in die Umwelt gelangt und zur Belastung derselben führt, verringert wird.

Aus der US-A-3 930 887 ist bekannt, daß man die Selbstentladung von Batterien, insbesondere vom Leclanché-Typ, dadurch vermindern kann, daß man den Pluspol und den Minuspol der Batterien über einen hochohmigen Widerstand ständig leitend miteinander verbindet, wobei ein Stromfluß entstehen soll, der etwa 20 % des Selbstentladungsstroms beträgt. Es wird angenommen, daß dieser schwache Strom eine Depolarisation der Pole bewirkt und dadurch die Selbstentladung vermindert wird. Das Problem der Korrosion und Gasentwicklung von Batterien auf Basis von sich alkalisch auflösendem Zink wird nicht ewähnt.

Die Erfindung hat sich die Aufgabe gestellt, Batterien auf Basis von sich alkalisch auflösendem Zink mit verringerter Korrosion und Gasentwicklung zu entwickeln, die möglichst kein Quecksilber oder nur so geringe Mengen Quecksilber enthalten, daß die Umweltbelastung so gering wie möglich gehalten wird.

Es wurde jetzt gefunden, daß diese Aufgabe überraschend einfach gelöst werden kann, dadurch, daß der Pluspol und der Minuspol über einen hochohmigen Widerstand ständig leitend miteinander verbunden sind, welcher einen ständigen Stromfluß ermöglicht, der gleich oder maximal um den Faktor 10 größer ist als der Stromfluß der dem Zinkverbrauch durch Korrosion entspricht. Es hat sich gezeigt, daß bereits ein derartig schwacher Stromfluß in der Lage ist, die Korrosion und vor allem die Gasentwicklung im erheblichen Maße zu reduzieren. Es hat sich weiterhin gezeigt, daß die Lebensdauer der Batterien durch diese Maßnahme praktisch nicht verringert wird, da auch dann ein Zinkverbrauch durch Korrosion stattfindet, wenn kein Strom entnommen wird. Durch geeignete Wahl des hochohmigen Widerstandes kann man diesen Stromfluß so bemessen, daß er gleich oder maximal um den Faktor 10 größer ist. Vorzugsweise wird man versuchen, diesen widerstand so zu wählen, daß der Stromfluß um den Faktor 1,5 bis 3 größer ist als der Stromfluß, der dem Zinkverbrauch durch Korrosion entspricht.

Serienmäßig kann dies besonders einfach erfolgen durch ein Distanzstück zwischen den Polen mit geringer Leitfähigkeit oder durch Vewendung einer leitfähigen Folie oder eines leitfähigen Lacks.

Derartige erfindungsgemäße Batterien zeigen eine wesentlich geringere Korrosion und Gasentwicklung als Batterien ohne einen derartigen ständigen Stromfluß, Es ist somit möglich, den Zusatz von Quecksilber erheblich zu reduzieren oder sogar auf Null zu senken.

Für den Fachmann hat zunächst ein Vorurteil dagegen bestanden, einen größeren Teil der in der Batterie erzeugten elektrischen Energie nutzlos zu vergeuden und direkt von einem Pol zum anderen Pol abzuleiten. Da jedoch dieser Stromfluß so gering gewählt werden kann, daß er nur gleich oder maximal um den Faktor 10 größer ist als der Stromfluß, der dem Zinkverbrauch durch Korrosion entspricht, wird die Lebensdauer der Batterien praktisch nicht beeinflußt.

Die Eigenschaften erfindungsgemäßer Batterien sowie die Durchführung des erfindungsgemäßen Verfahrens sind in den naohfolgenden Beispielen näher erläutert.

Beispiel 1

Eine handelsübliche Mono Zelle, in der amalgamiertes Zinkpulver mit einem Quecksilbergehalt von ca. 1,5 %, bezogen auf die Trockenmasse des Zinkpulvers enthalten war, wurde nach Lagerung von 60 Tagen bei 70°C unter Wasser geöffnet.

Beim Öffnen entwichen 50 ml Gas aus der Batterie. Das für diese alkalische Batterie verwendete amalgamierte Zinkpulver ist im allgemeinen so sauber, daß es in reinem Batterie-Elektrolyt bei 60°c pro Gramm und Tag nicht mehr als 7 µl Wasserstoff entwickelt. In der handelsfertigen Batterie ist jedoch die Gasentwicklung aufgrund von Verunreinigungen, die im Fertigungsprozeß eingebracht werden oder aus anderen Batterie-Bauteilen und Inhaltsstoffen stammen, wesentlich größer. In handelsüblichen Zellen kann z.B. bei 80°c eine Gasentwicklung von 0,1 bis 0,5 ml pro Tag gemessen werden. Verbindet man den Plus- und Minuspol einer derartigen Batterie durch einen äußeren Widerstand von 100 kΩ, so vermindert sich die meßbare Gasentwicklung um mehr als den Faktor 3. Eine typische handelsübliche Mignon Zelle hat eine Kapazität von 1.800 mAh. Eine solche Batterie kann theoretisch ein Jahr lang einen Strom von 0,2 mA abgeben. Durch einen äußeren Widerstand von 100 kΩ wird eine Mignon Zelle bei einem Strom von 15 µA theoretisch erst in 11 Jahren entladen. Für Baby- und Mono-Zellen ist die Kapazität aufgrund des vielfachen Zinkinhaltes entsprechend größer.

## Beispiel 2

Es wurden 20 Mono Zellen im Einzelhandel gekauft. Der Quecksilber-Inhalt des Zinkpulvers dieser Batterien wurde zu ca. 1,5 % in der Trockenmasse bestimmt. An zehn Zellen wurde an die Pole ein Widerstand von 100 kΩ gelötet. Die Zellen wurden im Trockenschrank 60 Tage bei 70°C gelagert. Am 61. Tage wurde festgestellt, daß aus sechs der zehn Zellen, die nicht mit einem Widerstand versehen waren, bereits Elektrolyt ausgetreten war, nur vier der zehn Zellen zeigten noch kein Leck. Von den Zellen, an die die Widerstände gelötet waren, zeigte keine ein Leck.

## Beispiel 3

Handelsübliche Baby Zellen, deren Quecksilbergehalt ca. 1,5 % bezogen auf die Trockenmasse des Zinkpulvers betrug, wurden wie folgt behandelt: Die äußeren Hüllen der Batterien wurden entfernt. Der Anodenableiter wurde aus der Batterie herausgezogen. Aus ebenfalls handelsüblichen Mignon Zellen wurde der aufgrund des Quecksilber-Inhaltes der Zellen mit Quecksilber überzogene Anodenableiter entfernt und als Anodenableiter für die Baby Zellen verwendet. Da der Ableiter der Mignon Zellen einen geringeren Durchmesser hat als der der Baby Zellen, Wurde auf diese Weise die Babyzelle nicht mehr gasdicht verschlossen. An drei dermaßen behandelten Baby Zellen wurde ein 100 kΩ Widerstand gelötet. Diese drei Zellen und drei weitere ohne Widerstand wurden jeweils in einen mit Paraffin-Öl gefüllten Gasmeßkolben eingesetzt. Nach 24 Stunden Lagerung bei 60°C war aus den Batterien ohne Widerstand 0,5, 1,2 bzw. 1,6 ml Gas entwichen. Nach weiteren 24 Stunden bei 60°C betrug das insgesamt abgegebene Gasvolumen 0,6, 1,7 bzw. 1,6 ml. Die mit einem Widerstand versehenen Batterien gaben nach Lagerung bei 60°C in 24 Stunden 0,22, 0,32 und 0,13 ml Gas ab. Nach weiteren 24 Stunden betrug die Gasabgabe insgesamt 0,28, 0,46 bzw. 0,43 ml.

## Beispiel 4

Aus handelsüblichen Baby-Zellen wurden die Anodenableiter entfernt und LR 6 Zellen entnommene Anodenableiter eingeführt, so daß aus den Batterien Gas entweichen konnte. An drei Zellen wurde ein 100 kΩ Widerstand gelötet. Drei Zellen ohne Widerstand wurden zum Vergleich untersucht. Die Zellen ohne Widerstand gaben in 24 Stunden bei 60°C ein Gasvolumen von 0,3, 0,4 bzw. 0,9 ml ab. Die drei Zellen mit dem Widerstand gaben in der gleichen Zeit bei 60°C ein Gasvolumen von 0,1, 0,06 bzw. 0,7 ml ab.

## Ansprüche

1. Batterien auf Basis von sich alkalisch auflösendem Zink mit verringerter Korrosion und Gasentwicklung, dadurch gekennzeichnet, daß der Pluspol und der Minuspol über einen hochohmigen Widerstand ständig leitend miteinander verbunden sind, welcher einen ständigen Stromfluß ermöglicht, der gleich oder maximal um den Faktor 10 größer ist als der Stromfluß der dem Zinkverbrauch durch Korrosion entspricht.

2. Batterien gemäß Anspruch 1, dadurch gekennzeichnet, daß der hochohmige Widerstand als Distanzstück geringer Leitfähigkeit ausgebildet ist oder aus einer leitfähigen Folie oder leitfähigem Lack besteht.

3. Verfahren zur Verringerung der Gasentwicklung und Korrosion von Batterien auf Basis von sich alkalisch auflösendem Zink, dadurch gekennzeichnet, daß zwischen dem Pluspol und dem Minuspol eine ständige schwache Entladung erfolgt mit einer Stromstärke, die gleich oder maximal um den Faktor 10 größer ist als die Stromstärke die dem Zinkverbrauch durch Korrosion entspricht.